# EUROPÄISCHE PATENTSCHRIFT

(11) **EP 2 862 364 B1**
(45) Veröffentlichungstag und Bekanntmachung des Hinweises auf die Patenterteilung: **25.05.2016**
(21) Anmeldenummer: 13710363.6
(22) Anmeldetag: 13.03.2013
(51) Int. Cl.: H04Q 1/14

(54) **VERTEILERANSCHLUSSMODUL**
DISTRIBUTOR CONNECTION MODULE
MODULE DE BRANCHEMENT DE RÉPARTITEUR

(30) Priorität: 19.06.2012 DE 102012210311; 15.08.2012 DE 102012214516
(43) Veröffentlichungstag der Anmeldung: 22.04.2015
(73) Patentinhaber: Tyco Electronics Services GmbH, 8200 Schaffhausen (CH)
(72) Erfinder: BENEDETTO, Adrian, 12103 Berlin (DE); NEUMETZLER, Heiko, 12623 Berlin (DE); STRUCK, Detlev, 12209 Berlin (DE); FRANKE, René, 12489 Berlin (DE)
(74) Vertreter: Patentanwälte Bressel und Partner mbB
(86) Internationale Anmeldenummer: PCT/EP2013/055116
(87) Internationale Veröffentlichungsnummer: WO 2013/189616

(56) Entgegenhaltungen:
- DE-A1-102007 026 096
- DE-B3- 10 339 844

## Beschreibung

Die Erfindung betrifft ein Verteileranschlussmodul für die Telekommunikations- und Datentechnik.

Aus der DE 100 29 649 A1 ist ein Verteileranschlussmodul bekannt, umfassend ein Gehäuse, in dem von außen zugänglich Eingangs- und Ausgangskontakte zum Anschließen von Leitungen oder Adern angeordnet sind, wobei das Gehäuse mit einem Hohlraum ausgebildet ist, in dem Funktionselemente zwischen den Eingangs- und Ausgangskontakten angeordnet sind. Die Funktionselemente sind dabei auf mindestens einer Leiterplatte angeordnet, die in dem Gehäuse abgestützt ist. Die Eingangs- und Ausgangskontakte sind dabei beispielsweise als Aderanschlusskontakte in Form von Schneid-Klemm-Kontakten ausgebildet, wobei die Eingangs- und Ausgangskontakte vorzugsweise an gegenüberliegenden Stirnseiten des Gehäuses angeordnet sind. Weiter wird vorgeschlagen, dass zwischen einem Eingangs- und Ausgangskontakt jeweils ein Trennkontakt angeordnet ist, der von außen zugänglich ist.

Aus der DE 10 2007 026 096 A1 ist ein Aderanschlussmodul bekannt, umfassend ein zweiteiliges Gehäuse und eine Anzahl von Kontaktelementen, wobei die Kontaktelemente mindestens eine Anschlussseite aufweisen, die als Kontakt zum Anschließen von Adern ausgebildet ist. Das Kontaktelement weist weiter eine Schnittstelle auf, über die Überspannungs-Schutzelemente anschließbar sind. Das erste Gehäuseteil ist mit Aufnahmen ausgebildet, in die zweipolige Überspannungsableiter eingesetzt sind. Das Kontaktelement weist eine als Schnittstelle zum Überspannungsableiter ausgebildete Kontaktfläche auf, die in die Aufnahme ragt und einen ersten Pol des Überspannungsableiters kontaktiert, wobei der andere Pol des Überspannungsableiters durch ein Masseelement kontaktiert wird.

Der Erfindung liegt das technische Problem zugrunde, ein Verteileranschlussmodul zu schaffen, das einen verbesserten Austausch von Funktionselementen ermöglicht.

Die Lösung des technischen Problems ergibt sich durch den Gegenstand mit den Merkmalen des Anspruchs 1. Weitere vorteilhafte Ausgestaltungen der Erfindung ergeben sich aus den Unteransprüchen.

Hierzu umfasst das Verteileranschlussmodul für die Telekommunikations- und Datentechnik ein Gehäuse, wobei in dem Gehäuse elektrische Eingangs- und Ausgangskontakte angeordnet sind, die als Aderanschlusskontakte ausgebildet sind, wobei jeweils ein Eingangskontakt mit einem Ausgangskontakt elektrisch verbunden ist, wobei in dem Gehäuse Funktionselemente angeordnet sind, die elektrisch mit den Ausgangskontakten verbunden sind, wobei die Eingangskontakte und Ausgangskontakte über Schnittstellenkontakte elektrisch und mechanisch verbunden sind, wobei die Eingangskontakte in einem Basismodul angeordnet sind und die Ausgangskontakte in mindestens zwei Teilmodule unterteilt bzw. angeordnet sind, wobei die Teilmodule voneinander unabhängig von dem Basismodul lösbar oder verbindbar sind. Dabei sind die Funktionselemente direkt mit den Ausgangskontakten bzw. die Ausgangskontakte aufweisenden Kontaktelemente verbunden. Hierdurch ist es möglich, ein Teilmodul aus dem Basismodul zu entfernen, das oder die Funktionselemente zu tauschen und das Teilmodul wieder in das Basismodul zu stecken, ohne dass dies Auswirkungen auf die anderen Eingangs- und Ausgangskontakte hat. Alternativ kann auch ein Teilmodul entfernt werden und durch ein anderes Teilmodul ersetzt werden. Ein weiterer Vorteil ist, dass durch das Entfernen des jeweiligen Teilmoduls die zugehörigen Eingangskontakte galvanisch von den Ausgangskontakten getrennt werden, sodass auftretende Überspannungen beim Wechsel der Funktionselemente nicht auf die Eingangskontakte übertragen werden. Die Aderanschlusskontakte können dabei Kontakte zum Anschließen einzelner Adern sein, wie beispielsweise Schneid-Klemm-Kontakte oder Wire-Wrap-Kontakte, oder aber Steckerbinder, wie beispielsweise RJ45-Buchsen. Vorzugsweise sind die Eingangskontakte und die Ausgangskontakte als Schneid-Klemm-Kontakte ausgebildet. Allerdings sind auch Kombinationen der Kontaktarten möglich, beispielsweise dass die Eingangskontakte als Steckverbinder und die Ausgangskontakte als Schneid-Klemm-Kontakte ausgebildet sind oder umgekehrt. Vorzugsweise dienen die Eingangs- und Ausgangskontakte zum Anschließen von Doppeladern. Die Größe der Teilmodule, d.h. die Anzahl der Ausgangskontakte, kann dabei abhängig vom Anwendungsfall variieren. So ist es möglich, jeweils zwei Ausgangskontakten ein Teilmodul zuzuordnen. In diesem Fall stellen die Teilmodule 1DA-Stecker dar. Dies erlaubt eine minimale Rückwirkung auf die anderen verbliebenen Eingangs- und Ausgangskontakte. Es sind jedoch auch Anwendungsfälle denkbar, wobei beispielsweise drei, vier oder mehr Ausgangskontakte einem Teilmodul zugeordnet sind. Die Eingangs- und Ausgangskontakte sind vorzugsweise an gegenüberliegenden Stirnseiten des Verteileranschlussmoduls angeordnet.

In einer Ausführungsform umfasst das Basismodul ein Mittelteil, wobei die Eingangskontakte bzw. die die Eingangskontakte umfassenden Kontaktelemente in mindestens einem Teilmodul angeordnet sind, die in dem Mittelteil verrastet sind. Dabei können die Eingangskontakte beispielsweise in genau einem Teilmodul angeordnet sein. Alternativ können auch mehrere Teilmodule für die Eingangskontakte vorgesehen sein, die beispielsweise zwei, vier oder acht Eingangskontakte aufweisen. Dabei sei angemerkt, dass die Teilung der Teilmodule für die Eingangs- und Ausgangskontakte auch gleich sein kann, aber nicht gleich sein muss. Vorzugsweise sind die Verbindungskräfte zwischen dem oder den Teilmodulen mit den Eingangskontakten ein Vielfaches größer als die Verbindungskräfte zwischen den Teilmodulen mit den Ausgangskontakten und dem Basismodul. Dies ist immer dann vorteilhaft, wenn die Teilmodule mit den Eingangskontakten große Zugkräfte aufnehmen müssen und ein Austausch nicht gewünscht ist. Es sind jedoch Ausführungsformen möglich, wo die Teilmodule mit den Eingangskontakten genauso einfach austauschbar sind wie die Teilmodule mit Ausgangskontakten. Dies ist insbesondere vorteilhaft, wenn durch Umstecken von Teilmodulen rangiert werden soll. So ist es beispielsweise möglich, einer Teilnehmerleitung, die an einem Teilmodul mit den Ausgangskontakten angeschlossen ist, eine andere Systemseite zuzuordnen. Beispielsweise wird ein Teilmodul mit den Eingangskontakten, wo POTS (plain old telephone service) ursprünglich angeschlossen war, entfernt und ein Teilmodul gesteckt, das mit einem MSAN (multi service access node) verbunden ist.

In einer weiteren Ausführungsform sind die Funktionselemente als Überspannungsableiter ausgebildet, vorzugsweise als dreipolige Überspannungsableiter. Vorzugsweise werden dabei Kontaktbeine der Überspannungsableiter in Gabelkontakten kontaktiert, die zwischen den Ausgangskontakten und den Schnittstellenkontakten angeordnet sind.

In einer weiteren Ausführungsform sind die Teilmodule mit den Ausgangskontakten in dem Basismodul verrastet, wobei das Basismodul Rastaufnahmen für zwei Raststellungen der Teilmodule aufweist. Dabei kann eine erste Raststellung derart sein, dass die Schnittstellenkontakte der Teilmodule mit den Ausgangskontakten noch nicht mit den Schnittstellenkontakten der Eingangskontakte elektrisch verbunden sind, wobei diese dann in der zweiten Raststellung elektrisch verbunden sind. Ist das Funktionselement ein Überspannungsableiter, so ist die erste Raststellung vorzugsweise derart dimensioniert, dass eine Mittelelektrode des Überspannungsableiters mit einer Erdschiene bereits elektrisch verbunden ist, die Schnittstellenkontakte hingegen noch nicht.

In einer Ausführungsform sind die Teilmodule mit den Ausgangskontakten mittels mindestens eines Befestigungsmittels zu einer Baueinheit zusammengefasst. Vorzugsweise sind dabei alle Teilmodule zu einer Baueinheit zusammenfassbar. Dadurch verringert sich der Aufwand bei der Zusammenstellung des Verteileranschlussmoduls, da nur die eine Baueinheit in das Basismodul gesteckt werden muss. Die Befestigungsmittel verbinden die Teilmodule dabei derart reversibel, dass nach dem Zusammenbau das Befestigungsmittel wieder gelöst werden kann, um ein einzelnes Teilmodul zu entnehmen. Dabei kann das Befestigungsmittel ein separates Bauteil sein (beispielsweise ein Rahmen) oder aber die Teilmodule selbst sind jeweils mit Befestigungsmitteln ausgebildet, um aneinander befestigt zu werden. Beispielsweise hat jedes Teilmodul an der einen Seitenwand eine Nut und an der anderen Seitenwand eine Feder, um eine Nut-Feder-Verbindung mit einem benachbarten Teilmodul zu bilden. Andere lösliche Verbindungen, wie beispielsweise Steck- oder Rastverbindungen, sind ebenfalls möglich. Dabei kann das separate Befestigungsmittel auch derart ausgebildet sein, dass dieses nach Stecken der Baueinheit entfernt werden kann. Alternativ oder zusätzlich können auch die Teilmodule mit den Eingangskontakten solche Befestigungsmittel aufweisen.

In einer weiteren Ausführungsform ist an dem Basismodul mindestens ein Verriegelungselement angeordnet, mittels dessen die Teilmodule der Ausgangskontakte und/oder die Baueinheit im Basismodul verriegelt werden. Dadurch wird ein versehentliches Entfernen eines Teilmoduls und/oder der Baueinheit verhindert. Zum gezielten Entfernen eines Teilmoduls muss dann zunächst das Verriegelungselement gelöst werden und anschließend die Befestigung zwischen den Teilmodulen (soweit diese noch vorhanden ist). Alternativ oder zusätzlich kann auch den Teilmodulen mit den Eingangskontakten ein solches Verriegelungselement zugeordnet sein.

In einer weiteren Ausführungsform sind die Schnittstellenkontakte als Kontaktzungen und Doppel-Federkontakte ausgebildet. Vorzugsweise sind die Schnittstellenkontakte der Eingangskontakte als Doppel-Federkontakte und die Schnittstellenkontakte der Ausgangskontakte als Kontaktzungen ausgebildet.

Alternativ können die Schnittstellenkontakte auch als Gabelkontakte ausgebildet sein. Dabei können beide Schnittstellenkontakte als Gabelkontakte ausgebildet sein oder ein Schnittstellenkontakt ist als Gabelkontakt und der andere Schnittstellenkontakt ist als Kontaktzunge ausgebildet.

In einer weiteren Ausführungsform sind die Ausgangskontakte mit Prüfkontakten verbunden, über die beispielsweise in die Linie gemessen werden kann oder aber weitere Funktionselemente anschließbar sind.

In einer weiteren Ausführungsform weist das Basismodul Schlitze auf, wobei das Basismodul von der Oberseite zugängliche Schlitze und von der Unterseite zugängliche Schlitze aufweist, wobei die von der Unterseite zugänglichen Schlitze länger sind. Dadurch liegt ein Basismodul beim Beschalten der Eingangskontakte höher, wobei durch die Länge der Schlitze die Höhe zu einem kompletten Verteileranschlussmodul einstellbar ist. Vorzugsweise ist das Basismodul in dieser Position mindestens so hoch wie ein komplettes Verteileranschlussmodul, wenn dieses über die längeren Schlitze befestigt wird.

Die Erfindung wird nachfolgend anhand eines bevorzugten Ausführungsbeispiels näher erläutert. Die Fig. zeigen:
- Fig. 1: eine perspektivische Darstellung eines vollständigen Verteileranschlussmoduls,
- Fig. 2: eine perspektivische Darstellung eines vollständigen Verteileranschlussmoduls mit einem entfernten Teilmodul,
- Fig. 3: eine perspektivische Darstellung eines Basismoduls mit einem eingesteckten Teilmodul,
- Fig. 4: eine perspektivische Darstellung eines Basismoduls,
- Fig. 5: eine perspektivische Darstellung eines Teilmoduls im zusammengesetzten Zustand,
- Fig. 6: eine Explosionsdarstellung eines Teilmoduls,
- Fig. 7: eine perspektivische Darstellung einer Erdschiene mit Kontakten eines Teilmoduls und Kontakten des Basismoduls,
- Fig. 8: eine perspektivische Darstellung einer Montagewanne mit drei aufgesteckten Verteileranschlussmodulen,
- Fig. 9: eine perspektivische Teildarstellung einer Montagewanne mit aufgestecktem Basismodul,
- Fig. 10: eine perspektivische Darstellung einer Montagewanne mit aufgestecktem Verteileranschlussmodul zum Anschließen der Eingangskontakte,
- Fig. 11: eine Explosionsdarstellung eines Basismoduls einer zweiten Ausführungsform,
- Fig. 12: eine perspektivische Darstellung eines zusammengesetzten Basismoduls ohne Erdschiene,
- Fig. 13: eine erste Detaildarstellung des Basismoduls,
- Fig. 14: eine zweite Detaildarstellung des Basismoduls,
- Fig. 15: eine perspektivische Vorderansicht eines Teilmoduls in einer zweiten Ausführungsform,
- Fig. 16: eine perspektivische Rückansicht eines Teils des Teilmoduls von Fig. 15,
- Fig. 17: eine Explosionsdarstellung des Teilmoduls von Fig. 15 und Fig. 16,
- Fig. 18: eine perspektivische Darstellung der elektrischen Kontaktierung und

- Fig. 19: eine perspektivische Darstellung von einem Verteileranschlussmodul und einem Basismodul auf einer Montagewanne.

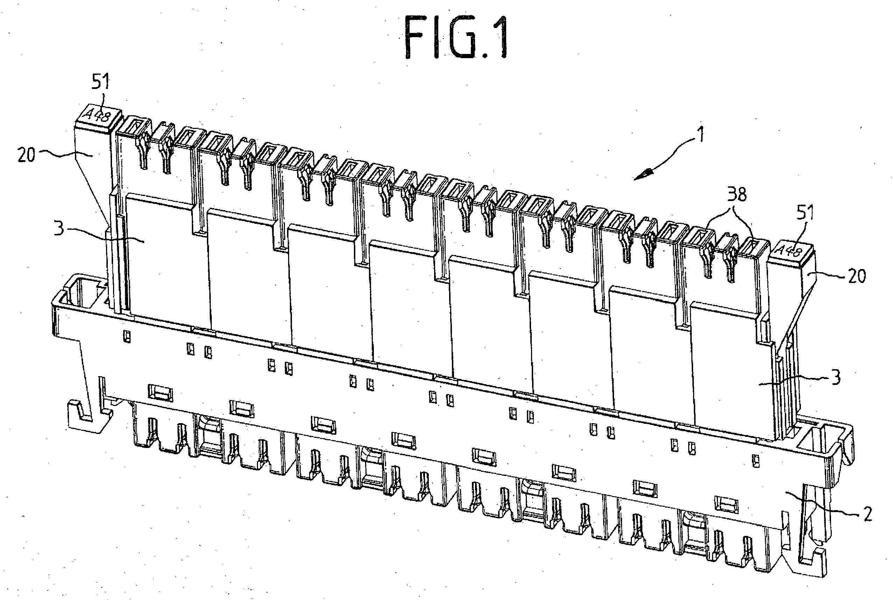

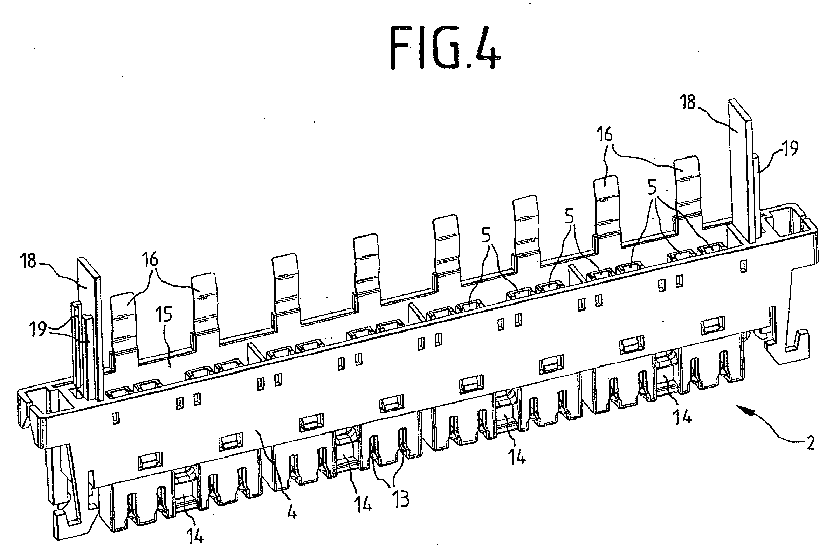

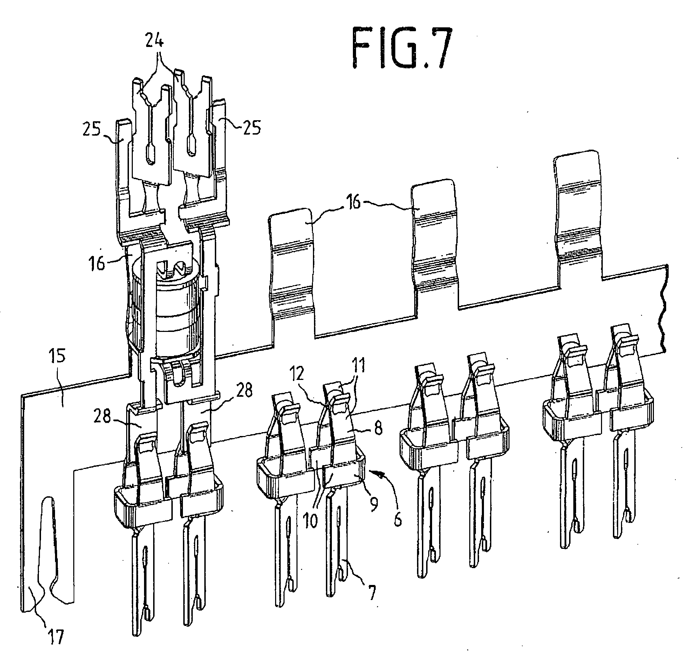

In der Fig. 1 ist ein Verteileranschlussmodul 1 für jeweils acht Doppeladern dargestellt. Das Verteileranschlussmodul 1 umfasst ein Basismodul 2 sowie acht Teilmodule 3. Bevor das Verteileranschlussmodul 1 näher erläutert wird, wird zunächst das Basismodul 2 anhand der Fig. 4 und 7 näher erläutert.

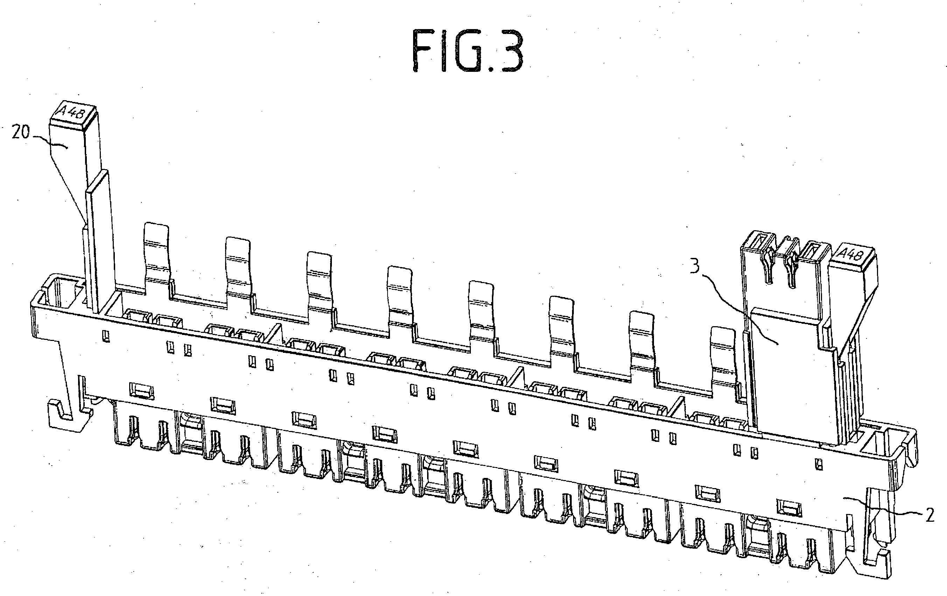

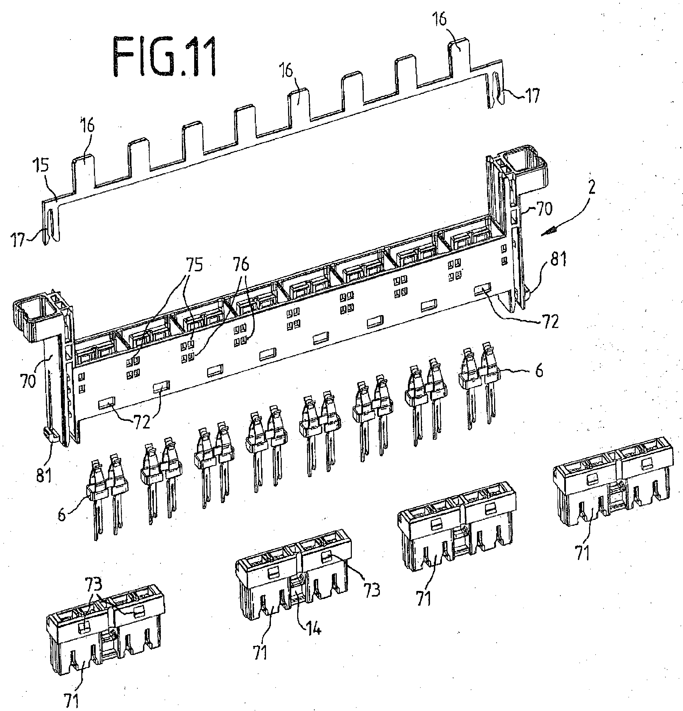

Das Basismodul 2 umfasst ein Gehäuse 4 mit sechzehn Kammern 5 für Kontaktelemente 6. Jedes Kontaktelement 6 umfasst einen Eingangskontakt 7 des Verteileranschlussmoduls 1 in Form eines Schneid-Klemm-Kontaktes und einen Schnittstellenkontakt 8 in Form eines symmetrischen Doppel-Federkontaktes. Dabei geht von der Unterseite des Schneid-Klemm-Kontaktes ein U-förmiges Element 9 ab, von dessen Schenkeln 10 senkrecht nach oben sich jeweils eine Feder 11 erstreckt. Die beiden Federn 11 berühren sich dabei in einem Kontaktbereich 12. Die Kontaktelemente 6 werden dann in die Kammern 5 gesteckt, sodass die Schneid-Klemm-Kontakte in Kontaktschlitzen 13 liegen. Das Gehäuse 4 weist vier Öffnungen 14 auf, die jeweils zwei Eingangskontaktpaaren zugeordnet sind. Diese Öffnungen 14 dienen als Kabelführung und Zugentlastung. Dabei werden jeweils zwei Doppeladern von hinten durch die Öffnung 14 nach vorn geführt und eine Doppelader nach links und eine Doppelader nach rechts zu den Eingangskontakten 7 geführt. Durch diese Aderführung werden Zugkräfte umgeleitet, sodass diese nicht mittelbar durch die Eingangskontakte 7 verlaufen. Weiter umfasst das Basismodul 2 eine Erdschiene 15 mit acht Kontaktlaschen 16 sowie zwei Gabelkontakten 17 (siehe Fig. 7), wobei in Fig. 7 nur ein Gabelkontakt 17 zu sehen ist. Weiter umfasst das Basismodul 2 zwei Abstützelemente 18, die an ihren Außenseiten Befestigungsmittel 19 zur Aufnahme eines Steckzifferhalters 20 (siehe Fig. 3) aufweisen. In den Steckzifferhalter 20 kann dann eine Steckziffer 51 gesteckt werden (siehe Fig. 1). Des Weiteren ist das Basismodul 2 mit weiteren Kabelführungen ausgebildet. Dabei sei angemerkt, dass das Basismodul 2 als einteiliges Gehäuse ausgebildet sein kann oder aber mehrteilig, was an den Rastnasen in Fig. 4 zu erkennen ist und anhand von Fig. 11 später noch näher erläutert wird.

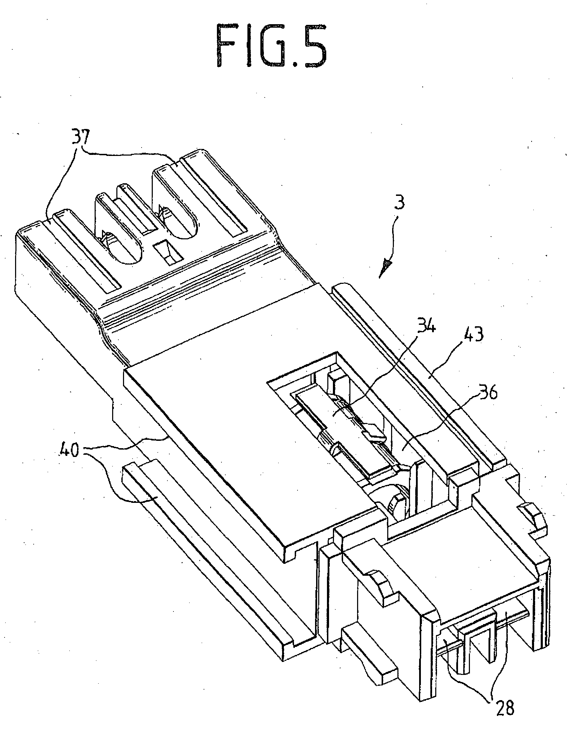

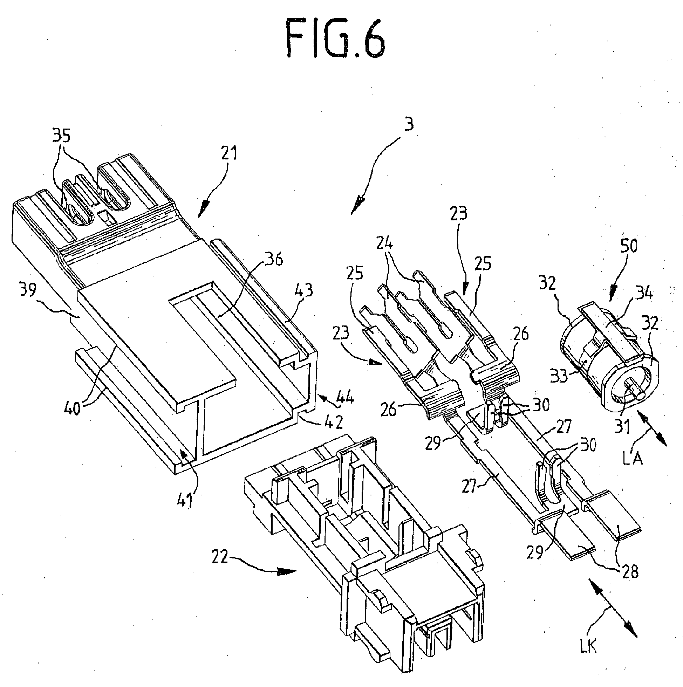

Anhand der Fig. 5 und Fig. 6 soll nun der Aufbau eines Teilmoduls 3 erläutert werden. Das Teilmodul 3 umfasst ein Gehäuse 21, einen Einsatz 22, zwei Kontaktelemente 23 sowie einen dreipoligen Überspannungsableiter 50. Jedes Kontaktelement 23 umfasst einen Ausgangskontakt 24 des Verteileranschlussmoduls 1 in Form eines Schneid-Klemm-Kontaktes sowie einen Prüfkontakt 25, die miteinander über einen Steg 26 elektrisch verbunden sind. Die Prüfkontakte 25 sind dabei als Kontaktzungen ausgebildet. Von dem Steg 26 erstreckt sich ein Verbindungssteg 27, an deren dem Steg 26 abgewandten Ende ein Schnittstellenkontakt 28 in Form einer Kontaktzunge angeordnet ist. Die Verbindungsstege 27 weisen jeweils eine Abwinkelung 29 auf, von denen jeweils ein Anschlusskontakt 30 in Form eines Gabelkontaktes abgeht. Wie aus Fig. 6 ersichtlich, liegen sich die Anschlusskontakte 30 von zwei Kontaktelementen 23 für eine Doppelader in einem gewissen Abstand gegenüber, sodass diese jeweils einen Kontaktpin 31 einer Außenelektrode 32 des Überspannungsableiters 50 kontaktieren können. Eine Mittelelektrode 33 des Überspannungsableiters 50 ist mit einem Fail-Safe-Kontakt 34 verbunden, der im Überspannungsfall die Außenelektroden 32 kurzschließt und über die Mittelelektrode mit Masse verbindet. Die beiden Kontaktelemente 23 bilden ein Kontaktpaar für eine Doppelader und werden dann in den Einsatz 22 von unten eingelegt, wobei der Überspannungsableiter 50 mit seinen Kontaktpins 31 an die Anschlusskontakte 30 angeschlossen wird. Anschließend wird der Einsatz 22 in das Gehäuse 21 geschoben, wo dieses verrastet. Die Schneid-Klemm-Kontakte liegen dann in Kontaktschlitzen 35, wobei der Fail-Safe-Kontakt 34 durch einen Einschnitt 36 des Gehäuses 21 zugänglich ist und durch eine Kontaktlasche 16 der Erdschiene 15 kontaktiert wird. Dabei sei angemerkt, dass bei Ausführungsformen ohne Fail-Safe-Kontakt 34 die Kontaktlasche 16 direkt die Mittelelektrode 33 kontaktiert. Des Weiteren weisen die Dome 37 neben den Kontaktschlitzen 35 Öffnungen 38 auf, durch die die Prüfkontakte 25 von außen zugänglich sind (siehe Fig. 1). An der einen Seitenwand 39 weist das Gehäuse 21 zwei im Querschnitt L-förmige Erstreckungen 40 auf, die eine Nut 41 bilden. Entsprechend weist die andere Seitenwand 42 eine im Querschnitt T-förmige Erstreckung 43 auf, die eine in die Nut 41 passende Feder 44 bildet. Über die Nut 41 bzw. Feder 44 können mehrere Teilmodule 3 zu einer Baueinheit verbunden werden, sodass dann die Baueinheit als ein Teil in das Basismodul 2 gesteckt werden kann. Die Haltekräfte der Nut-Feder-Verbindung sind dabei vorzugsweise größer ausgelegt als die auftretenden Zugkräfte beim Entfernen von Adern aus den Schneid-Klemm-Kontakten.

Beim Zusammenstecken der Baueinheit bzw. Teilmodule 3 mit dem Basismodul 2 tauchen die Schnittstellenkontakte 28 der Teilmodule 3 in die Schnittstellenkontakte 8 des Basismoduls 2 ein und verbinden elektrisch die Eingangskontakte 7 des Basismoduls 2 mit den Ausgangskontakten 24 der Teilmodule 3 (siehe Fig. 7).

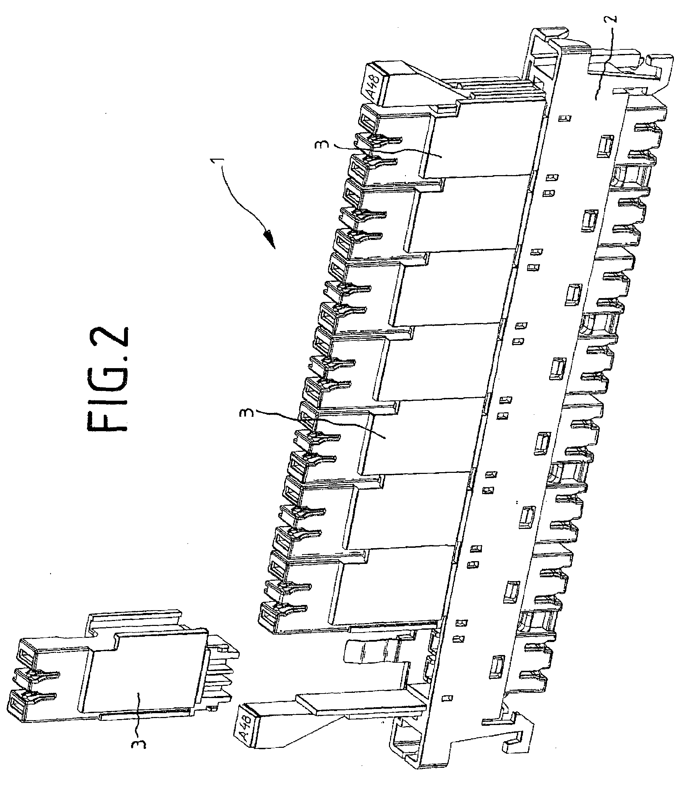

Soll nun beispielsweise ein defekter Überspannungsableiter 50 ersetzt werden, so wird nur dessen Teilmodul 3 gezogen (siehe Fig. 2), wobei die anderen sieben Teilmodule 3 mit ihren angeschlossenen Doppeladern gesteckt bleiben, d.h. es wird nur eine Linie unterbrochen.

Weiter sei angemerkt, dass die Anschlusskontakte 30 auch gedreht werden können, sodass der Überspannungsableiter 50 mit seiner Längsrichtung LA senkrecht zur Längsrichtung LK der Kontaktelemente 23 steht.

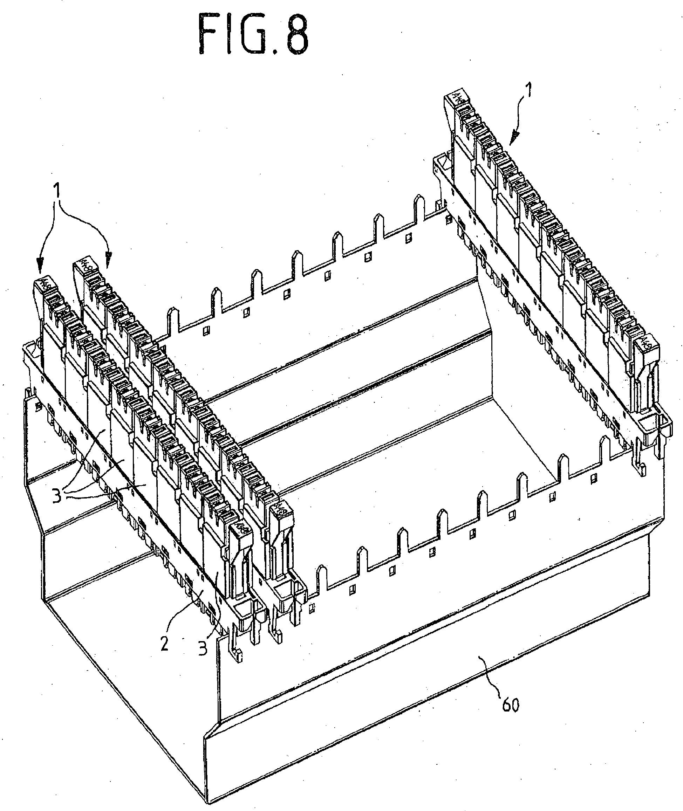

In der Fig. 8 ist dargestellt, wie drei Verteileranschlussmodule 1 auf eine Montagewanne 60 gesteckt sind, wobei jeweils die Gabelkontakte 17 der Erdschiene 15 die Montagewanne 60 kontaktieren und so eine Erdverbindung zu dem Überspannungsableiter 50 herstellen.

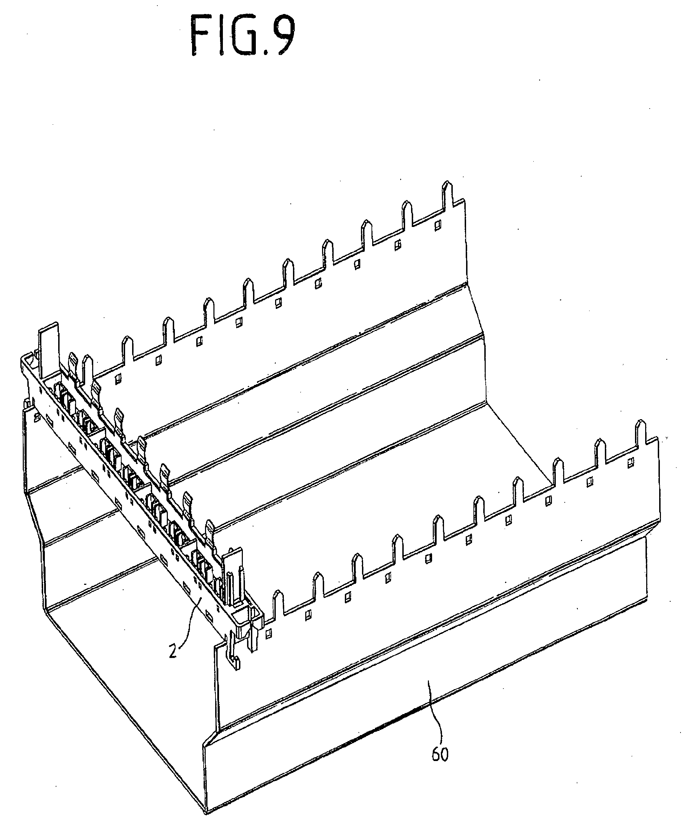

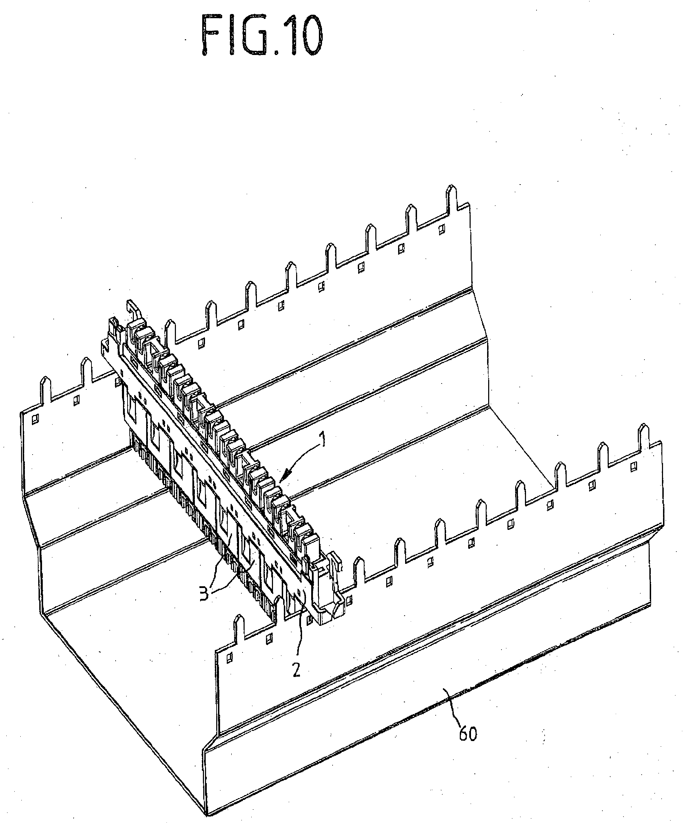

In Fig. 9 ist dargestellt, wie das Basismodul 2 auf die Montagewanne 60 gesteckt ist. Sind die Kontaktelemente 6 verliersicher in dem Basismodul 2 angeordnet, so kann das Basismodul 2 bereits vorkonfektioniert beschaltet auf die Montagewanne 60 gesteckt werden. Ansonsten wird das Basismodul 2 zunächst mit den Teilmodulen 3 bestückt und anschließend auf die Montagewanne 60 gedreht aufgesteckt (siehe Fig. 10) und beschaltet, wobei im dargestellten Ausführungsbeispiel zuvor die Steckzifferhalter 20 aus Platzgründen entfernt wurden.

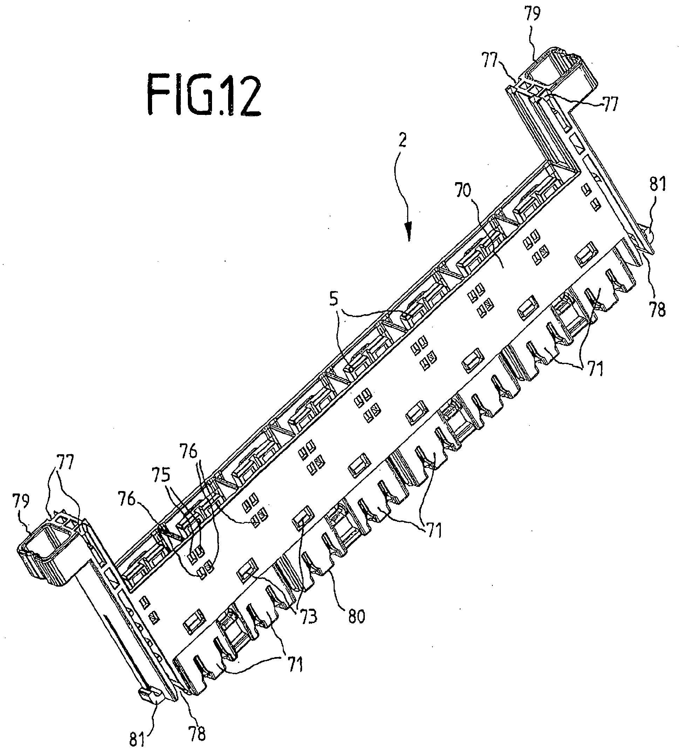

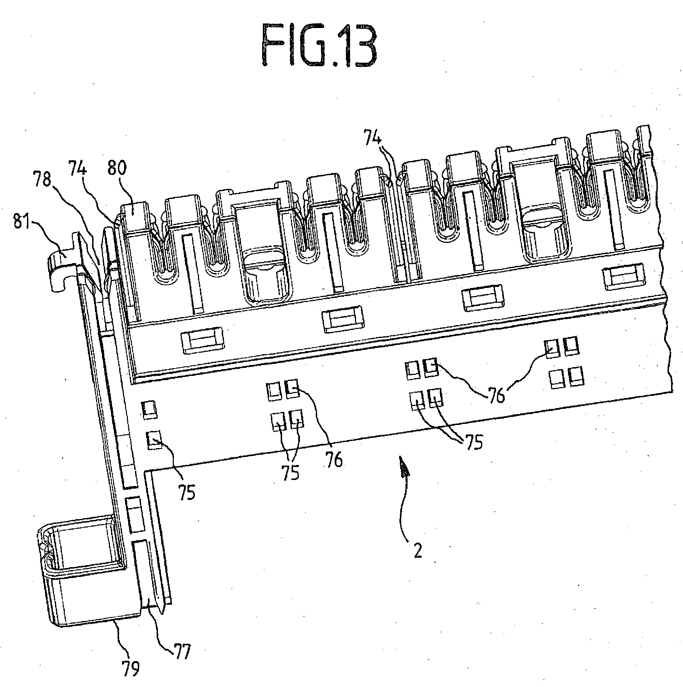

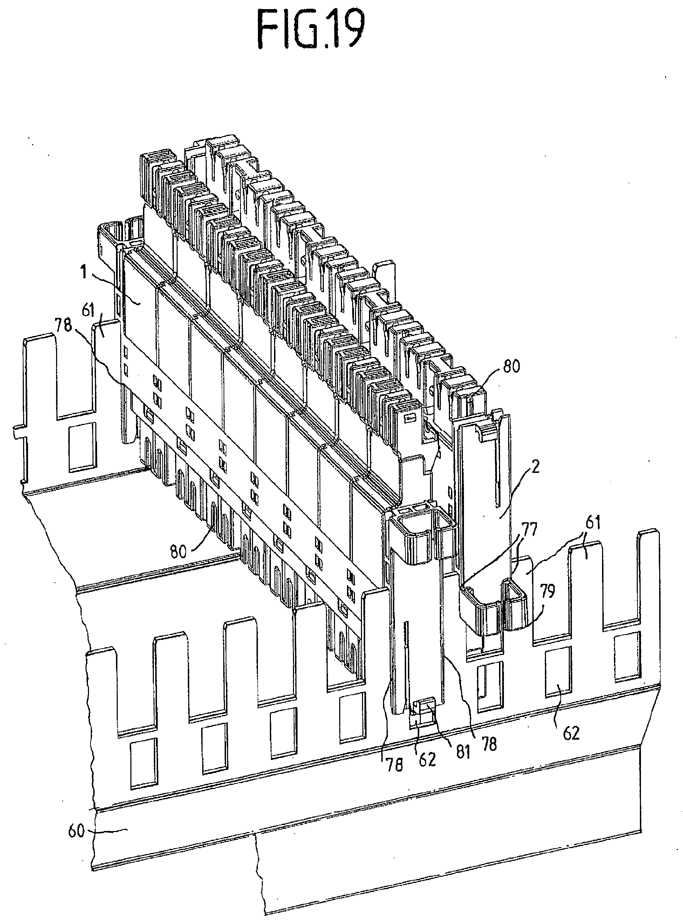

In den Fig. 11 bis 14 ist ein Basismodul 2 in einer leicht modifizierten Ausführungsform dargestellt. Das Basismodul 2 umfasst ein Mittelteil 70 sowie vier Teilmodule 71 für die Kontaktelemente 6 bzw. Eingangskontakte 7. Jedes Teilmodul 71 ist dabei zur Aufnahme von vier Kontaktelementen 6 ausgebildet, entsprechend zwei Doppeladern. Die Teilmodule 71 weisen dabei jeweils ein Gehäuse 71a auf, das vorzugsweise einstückig ist. Andere Aufteilungen wie beispielsweise 1 DA oder 4 DA sind möglich. Zur Verbindung der Teilmodule 71 mit dem Mittelteil 70 weist das Mittelteil 70 Rastaufnahmen 72 und die Teilmodule 71 Rastnasen 73 auf. Die Rastverbindung ist dabei vorzugsweise derart dimensioniert, dass die Verbindungskräfte erheblich größer als zwischen den Teilmodulen 3 und dem Basismodul 2 sind. Dabei können die Kontaktelemente 6 zunächst in die Teilmodule 71 gesteckt werden und anschließend mit dem Mittelteil 70 verrastet werden. Alternativ ist es möglich, zunächst die Kontaktelemente 6 in das Mittelteil 70 zu stecken und dann die Teilmodule 71 aufzurasten. Schließlich ist auch denkbar, zunächst Mitteilteil 70 und Teilmodul 71 zu verrasten und dann die Kontaktelemente 6 einzustecken. Hinsichtlich der Ausbildung der Kontaktelemente 6 kann vollinhaltlich auf die Ausführungen zu Fig. 7 verwiesen werden. Die Teilmodule 71 weisen an ihren Außenseiten Rippen 74 auf, die ein zu starkes Durchbiegen des Basismoduls 2 verhindern (siehe Fig. 13). Anstelle der Rippen 74 sind auch andere Elemente wie Zapfen denkbar, die einen Biegeweg begrenzen. Weiter umfasst das Mittelteil 70 erste Rastaufnahmen 75 und zweite Rastaufnahmen 76 für die Teilmodule 3 mit den Ausgangskontakten 24, was später noch näher erläutert wird. Schließlich weißt das Basismodul 2 bzw. Mittelteil 70 Schlitze 77, 78 auf, wobei das Basismodul 7 bzw. Mittelteil 70 von der Oberseite 79 zugängliche Schlitze 77 und von der Unterseite 80 zugängliche Schlitze 78 aufweist, wobei die von der Unterseite 80 zugänglichen Schlitze 78 länger sind. Die Funktion der unterschiedlich langen Schlitze 77, 78 soll nun kurz anhand der Fig. 19 erläutert werden.

In der Fig. 19 ist eine Montagewanne 60 dargestellt, auf die ein komplettes Verteileranschlussmodul 1 sowie ein Basismodul 2 aufgesteckt sind. Die Montagewanne 60 weist dabei Zinken 61 und Rastöffnungen 62 auf, wobei im Gegensatz zur Darstellung in Fig. 10 das Verteileranschlussmodul 1 sowie das Basismodul 2 nicht auf die Zinken 61, sondern zwischen zwei Zinken 61 auf die Montagewanne 60 gesteckt werden. Dabei wird das komplette Verteileranschlussmodul 1 mit der Unterseite 80 des Basismoduls 2 aufgesteckt, d.h. die Zinken 61 laufen in den längeren Schlitzen 78, sodass das komplette Verteileranschlussmodul 1 tief eintaucht. Dabei kann vorgesehen sein, dass der Schlitz 78 an jeder Seite des Verteileranschlussmoduls 1 durchgängig ist oder aber zwei Schlitze pro Seite vorhanden sind. Eine Rastnase 81 des Basismoduls 2 taucht dann in die Rastöffnung 62 ein, sodass das Verteileranschlussmodul 1 fest auf der Montagewanne 60 sitzt. Das dahinter dargestellte Basismodul 2 ist hingegen mit der Oberseite 79 aufgesteckt. Da die Schlitze 77 kürzer sind, taucht dieses nicht so tief ein und die Eingangskontakte 7 liegen auf gleicher Höhe wie die Ausgangskontakte 24 des kompletten Verteileranschlussmoduls 1. Dadurch behindern bereits montierte Verteileranschlussmodule 1 nicht den Anschaltvorgang von Adern eines neuen Basismoduls 2.

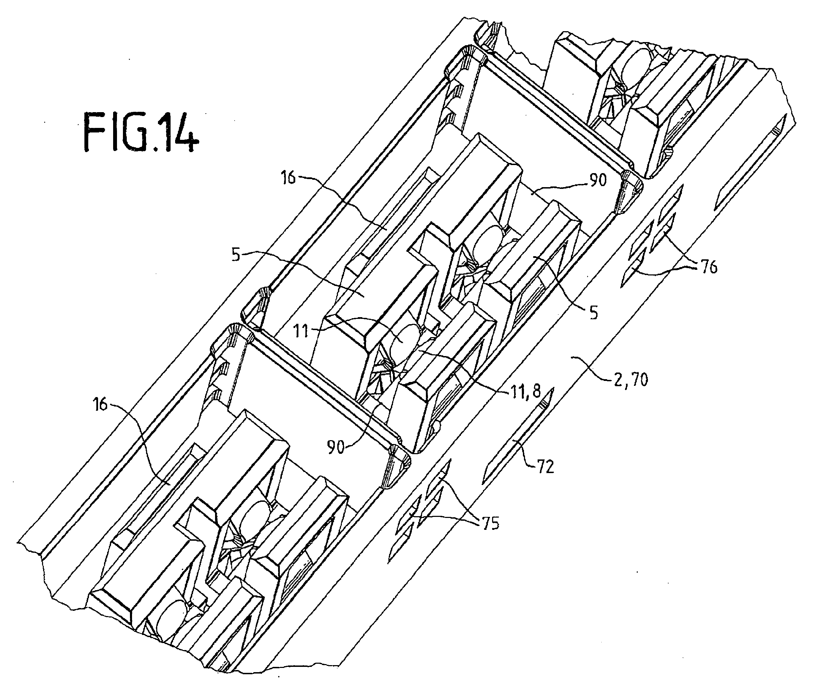

Ein weiterer Unterschied zwischen der Ausführungsform in Fig. 11 zu der in Fig. 4 ist, dass die Kontaktlaschen 16 der Erdschiene 15 keine Biegung aufweisen, sondern in einer Ebene mit der Schiene liegen. Dies wird später noch näher erläutert. In Fig. 14 sind die Kammern 5 vergrößert dargestellt, wobei die Schnittstellenkontakte 8 in Form der Doppel-Feder-Kontakte mit den beiden Federn 11 dargestellt sind. Die Kammern 5 sind seitlich mit Öffnungen 90 versehen, was auch den Einsatz von Leiterplatten in den Teilmodulen 3 als Schnittstellenkontakte ermöglicht. Hinter den Kammern 5 sind die Kontaktlaschen 16 der Erdschiene 15 angeordnet.

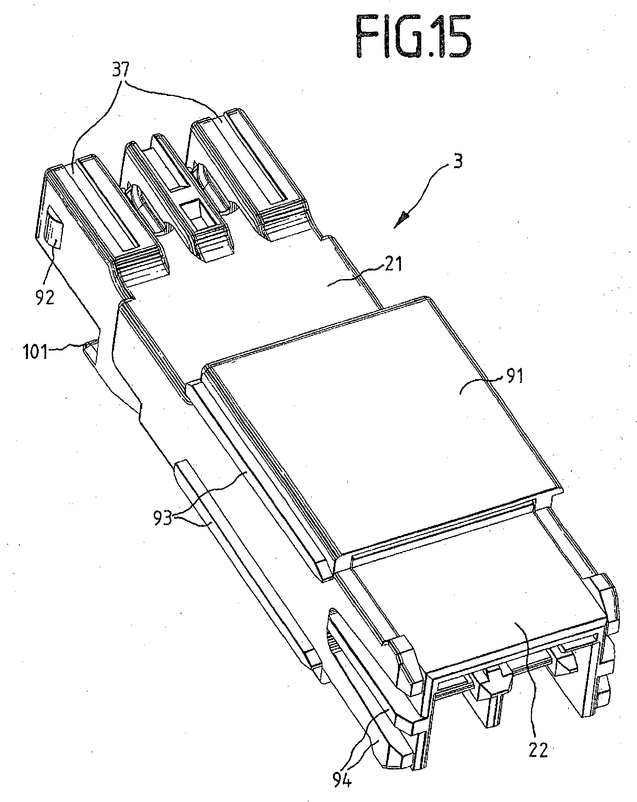

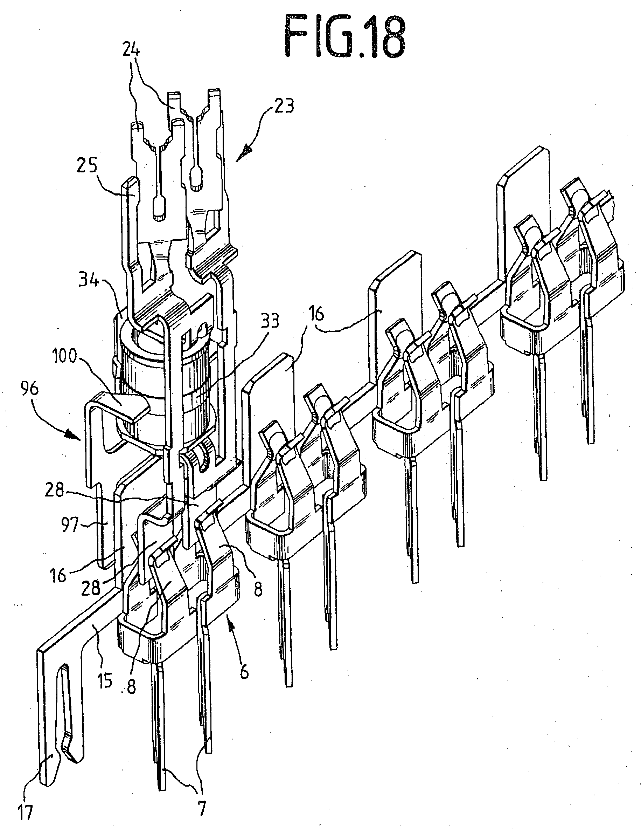

Anhand der Fig. 15 bis 17 wird nun eine alternative Bauform des Teilmoduls 3 für die Ausgangskontakte 24 näher erläutert, wobei gleiche Elemente wie in der Ausführungsform gemäß den Fig. 5 und 6 mit gleichen Bezugszeichen versehen sind. Dabei werden insbesondere nur die Unterschiede zwischen den beiden Bauformen näher erläutert. Das Gehäuse 21 besitzt im Gegensatz zur Ausführungsform gemäß Fig. 5 und 6 keinen Einschnitt 36, sondern eine durchgängige Abdeckung 91, sodass der Überspannungsableiter 50 im zusammengesetzten Zustand des Teilmoduls 3 berührungssicher im Gehäuse 21 angeordnet ist. Ein weiterer Unterschied des Gehäuses 21 sind halbzylinderförmige Noppen 92, die insbesondere ein Ziehen der Teilmodule 3 aus dem Basismodul 2 vereinfachen. Ein weiterer Unterschied des Gehäuses 21 ist, dass keine Mittel zum Verbinden von Teilmodulen 3 untereinander vorgesehen sind. Dafür weist das Gehäuse 21 Führungsschienen 93 und zwei Rastgabeln 94 auf. Mittels der Rastgabeln 94 kann das Teilmodul 3 in den ersten Rastaufnahmen 75 oder den zweiten Rastaufnahmen 76 des Basismoduls 2 verrastet werden. Dabei ist der Abstand der ersten und zweiten Rataufnahmen 75, 76 zueinander derart dimensioniert, dass, wenn die Rastgabeln 94 in der ersten Rastaufnahme 75 sitzen, die Schnittstellenkontakte 8 und 28 noch keinen elektrischen Kontakt haben, vorzugsweise jedoch eine federnde Kontaktlasche 95 eines Kontaktelements 96 bereits die Kontaktlasche 16 der Erdschiene 15 kontaktiert. Dieses Kontaktelement 96 weist ein Basisteil 97 auf, aus dem die Rastlasche 95 federnd freigeschnitten ist. An dem Basisteil 97 ist ein U-förmiger Abschnitt 98 angeordnet, von dessen Schenkeln 99 jeweils ein Kontakt 100 abgeht, der um 90° zu den Schenkeln 99 gebogen ist. Der U-förmige Abschnitt mit seinen Schenkeln 99 und den Kontakten 100 kann auch als Gabelkontakt bezeichnet werden, wobei die eigentlichen Kontakte umgebogen sind. Der Einsatz 22 ist entsprechend modifiziert, um dieses Kontaktelement 96 aufzunehmen. Des Weiteren sind bei dem Einsatz 22 die in den Fig. 5 und 6 zu erkennenden Rastmittel entfallen, die hier durch die Rastgabeln 94 am Gehäuse 21 ersetzt sind. Wie bei der Ausführungsform gemäß Fig. 5 und 6 werden zunächst die Kontaktelemente 23 mit dem Überspannungsableiter 50 in den Einsatz 22 eingelegt. Anschließend wird das Kontaktelement 96 auf dem Überspannungsableiter 50 aufgesteckt, wobei die beiden Kontakte 100 die Mittelelektrode 33 des Überspannungsableiters 50 kontaktieren, was in Fig. 18 dargestellt ist. Dabei liegen die Schnittstellenkontakte 28 vor den Kontaktlaschen 16 der Erdschiene 15, wohingegen die Kontaktlasche 95 des Kontaktelements 96 hinter der Kontaktlasche 16 liegt und diese kontaktiert.

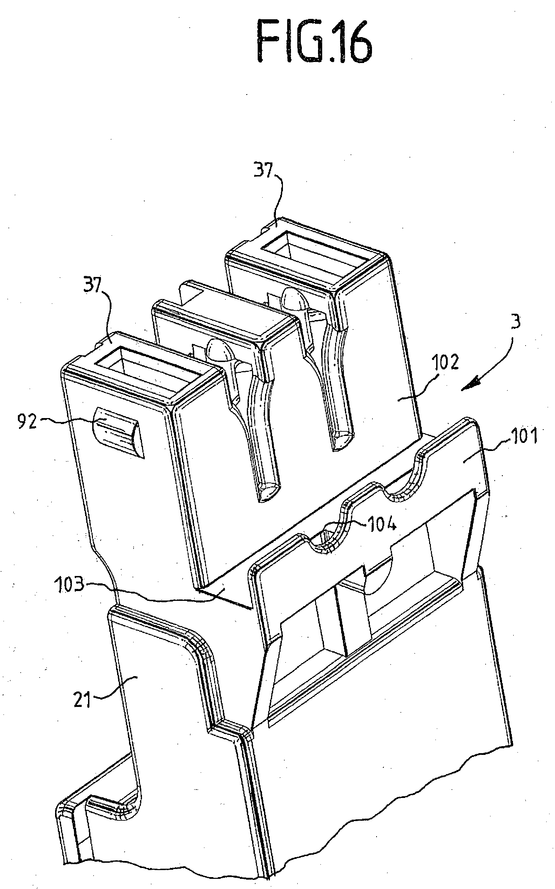

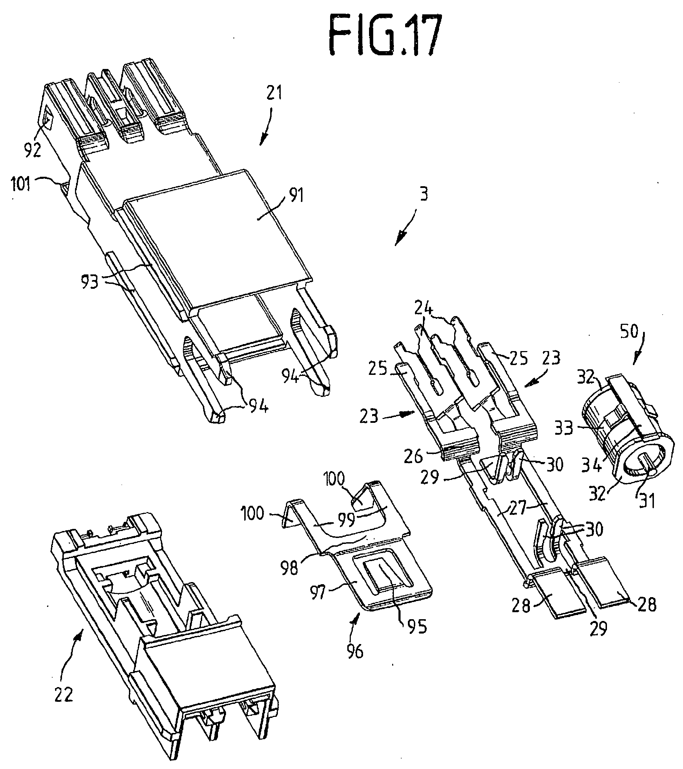

Ein weiterer Unterschied des Gehäuses 21 ist in Fig. 16 dargestellt, die eine Rückansicht des Gehäuses von Fig. 17 darstellt. Unterhalb der Dome 37 ist beabstandet eine Wand 101 angeordnet, sodass sich zwischen einer Rückwand 102 der Dome 37 und der Wand 101 ein Kanal 103 ausbildet. In dem Kanal 103 sind Öffnungen 104 vorgesehen. Die Breite des Kanals 103 sowie die Höhe der Wand 101 sind so dimensioniert, dass sich ein normgerechter Berührungsschutz zu einer im Schneidklemmschlitz abgeschnittenen Ader ergibt. Durch die Öffnung 104 kann ein Haken eines Anlegewerkzeuges geführt werden, um das einzelne Teilmodul 3 aus dem Basismodul 2 herauszuziehen bzw. um eine Rasterposition in den ersten Rastaufnahmen 75 zu erreichen.

Abschließend sei angemerkt, dass das Basismodul 2 mit seinen Schnittstellenkontakten 8 eine universell beschaltbare Systemplattform darstellt, in die je nach Anwendungsfall geeignete Teilmodule 3 eingesteckt werden können, wobei einzige Vorraussetzung ist, dass die Teilmodule 3 einen passenden Schnittstellenkontakt 28 für das Basismodul 2 aufweisen.

### Bezugszeichenliste

- 1: Verteileranschlussmodul
- 2: Basismodul
- 3: Teilmodul
- 4: Gehäuse
- 5: Kammer
- 6: Kontaktelement
- 7: Eingangskontakt
- 8: Schnittstellenkontakt
- 9: Element
- 10: Schenkel
- 11: Feder
- 12: Kontaktbereich
- 13: Kontaktschlitz
- 14: Öffnung
- 15: Erdschiene
- 16: Kontaktlasche
- 17: Gabelkontakt
- 18: Abstützelement
- 19: Befestigungsmittel
- 20: Steckzifferhalter
- 21: Gehäuse
- 22: Einsatz
- 23: Kontaktelement
- 24: Ausgangskontakt
- 25: Prüfkontakt
- 26: Steg
- 27: Verbindungssteg
- 28: Schnittstellenkontakt
- 29: Abwinkelung
- 30: Anschlusskontakt
- 31: Kontaktpin
- 32: Außenelektrode
- 33: Mittelelektrode
- 34: Fail-Safe-Kontakt
- 35: Kontaktschlitz
- 36: Einschnitt
- 37: Dom
- 38: Öffnung
- 39: Seitenwand
- 40: L-förmige Erstreckung
- 41: Nut
- 42: Seitenwand
- 43: T-förmige Erstreckung
- 44: Feder
- 50: Überspannungsableiter
- 51: Steckziffer
- 60: Montagewanne
- 61: Zinken
- 62: Rastaufnahme
- 70: Mittelteil
- 71: Teilmodul
- 71a: Gehäuse
- 72: Rastaufnahme
- 73: Rastnase
- 74: Rippe
- 75: erste Rastaufnahme
- 76: zweite Rastaufnahme
- 77: Schlitz
- 78: Schlitz
- 79: Oberseite
- 80: Unterseite
- 81: Rastnase
- 90: Öffnung
- 91: Abdeckung
- 92: Noppe
- 93: Führungsschiene
- 94: Rastgabel
- 95: Kontaktlasche
- 96: Kontaktelement
- 97: Basisteil
- 98: U-förmiger Abschnitt
- 99: Schenkel
- 100: Kontakt
- 101: Wand
- 102: Rückwand
- 103: Kanal
- 104: Öffnung
- LA: Längsrichtung des Überspannungsableiters
- LK: Längsrichtung des Kontaktelements

## Patentansprüche

1. Verteileranschlussmodul (1) für die Telekommunikations- und Datentechnik, umfassend ein Gehäuse, wobei in dem Gehäuse elektrische Eingangs- und Ausgangskontakte (7, 24) angeordnet sind, die als Aderanschlusskontakte ausgebildet sind, wobei jeweils ein Eingangskontakt (7) mit einem Ausgangskontakt (24) elektrisch verbunden ist, wobei in dem Gehäuse Funktionselemente angeordnet sind, die elektrisch mit den Ausgängskontakten (24) verbunden sind, **dadurch gekennzeichnet, dass** die Eingangskontakte (7) und Ausgangskontakte (24) über Schnittstellenkontakte (8, 28) elektrisch und mechanisch verbunden sind, wobei die Eingangskontakte (7) in einem Basismodul (2) angeordnet sind und die Ausgangskontakte (24) in mindestens zwei Teilmodulen (3) angeordnet sind, wobei die Teilmodule (3) voneinander unabhängig von dem Basismodul lösbar oder verbindbar sind.

2. Verteileranschlussmodul nach Anspruch 1, **dadurch gekennzeichnet, dass** das Basismodul (2) ein Mittelteil (70) umfasst, wobei die Eingangskontakte (7) in mindestens einem Teilmodul (71) angeordnet sind, die in dem Mittelteil (70) verrastet sind.

3. Verteileranschlussmodul nach Anspruch 2, **dadurch gekennzeichnet, dass** die Verbindungskräfte zwischen dem oder den Teilmodulen (71) mit den Eingangskontakten (7) ein Vielfaches größer sind als die Verbindungskräfte zwischen den Teilmodulen (3) mit den Ausgangskontakten (24) und dem Basismodul (2).

4. Verteileranschlussmodul nach einem der vorangegangenen Ansprüche, **dadurch gekennzeichnet, dass** die Funktionselemente als Überspannungsableiter (50) ausgebildet sind.

5. Verteileranschlussmodul nach einem der vorangegangenen Ansprüche, **dadurch gekennzeichnet, dass** die Teilmodule (3) mit den Ausgangskontakten (24) in dem Basismodul (2) verrastet sind, wobei das Basismodul (2) Rastaufnahmen (75, 76) für zwei Raststellungen der Teilmodule (3) aufweist.

6. Verteileranschlussmodul nach einem der vorangegangenen Ansprüche, **dadurch gekennzeichnet, dass** die Teilmodule (3) mittels mindestens eines Befestigungsmittels zu einer Baueinheit zusammengefasst sind.

7. Verteileranschlussmodul nach einem der vorangegangenen Ansprüche, **dadurch gekennzeichnet, dass** an dem Basismodul (2) mindestens ein Verriegelungselement angeordnet ist, mittels dessen die Teilmodule (3) und/oder die Baueinheit im Basismodul (2) verriegelt werden.

8. Verteileranschlussmodul nach einem der vorangegangenen Ansprüche, **dadurch gekennzeichnet, dass** die Schnittstellenkontakte (8, 28) als Kontaktzungen und Doppel-Federkontakte ausgebildet sind.

9. Verteileranschlussmodul nach einem der vorangegangenen Ansprüche, **dadurch gekennzeichnet, dass** die Ausgangskontakte (24) mit Prüfkontakten (25) verbunden sind.

10. Verteileranschlussmodul nach einem der vorangegangenen Ansprüche, **dadurch gekennzeichnet, dass** das Basismodul (2) Schlitze (77, 78) aufweist, wobei das Basismodul (2) von der Oberseite (79) zugängliche Schlitze (77) und von der Unterseite (80) zugängliche Schlitze (78) aufweist, wobei die von der Unterseite (80) zugänglichen Schlitze (78) länger sind.

## Claims

1. A distribution module (1) for use in telecommunications and data processing technology and comprising a housing, wherein electrical input contacts (7) and electrical output contacts (24) are arranged in the housing, which contacts are embodied as wire connecting contacts, wherein in each case an input contact (7) is electrically connected to an output contact (24), wherein functional elements are arranged in the housing, which functional elements are electrically connected to the output contacts (24), wherein the input contacts (7) and the output contacts (24) are electrically and mechanically connected by way of interface contacts (8, 28), wherein the input contacts (7) are arranged in a base module (2) and the output contacts (24) are arranged in at least two part modules (3), wherein the part modules (3) can be released from or connected to the base module independently from each other.

2. The distribution module as claimed in claim 1, wherein the base module (2) comprises a middle part (70), with the input contacts (7) being arranged in at least one part module (71) and latched in the middle part (70).

3. The distribution module as claimed in claim 2, wherein the connection forces between the part module or the part modules (71) with the input contacts (7) are several times greater than the connection forces between the part modules (3) with the output contacts (24) and the base module (2).

4. The distribution module as claimed in any one of the preceding claims, wherein the functional elements are embodied as overvoltage protectors (50).

5. The distribution module as claimed in any one of the preceding claims, wherein the part modules (3) with the output contacts (24) are latched in the base module (2), with the base module (2) having latching receptacles (75, 76) for two latching positions of the part modules (3).

6. The distribution module as claimed in any one of the preceding claims, wherein the part modules (3) are combined by means of at least one fastening means to form one assembly unit.

7. The distribution module as claimed in any one of the preceding claims, wherein at least one locking element is arranged on the base module (2), by means of which locking element the part modules (3) and/or the assembly unit are locked in the base module (2).

8. The distribution module as claimed in any one of the preceding claims, wherein the interface contacts (8, 28) are embodied as contact tongues and double-tongue contacts.

9. The distribution module as claimed in any one of the preceding claims, wherein the output contacts (24) are connected to test contacts (25).

10. The distribution module as claimed in any one of the preceding claims, wherein the base module (2) has slots (77, 78), with the base module (2) having slots (77) which are accessible from the upper face (79) and slots (78) which are accessible from the lower face (80), with the slots (78) which are accessible from the lower face (80) being longer.

## Revendications

1. Module de branchement (1) de répartiteur pour la technique de télécommunication et de transmission des données, comportant un boîtier, dans le boîtier étant placés des contacts électriques (7, 24) d'entrée et de sortie, qui sont conçus en tant que contacts de branchement de conducteurs, chaque fois un contact d'entrée (7) étant électriquement relié avec un contact de sortie (24), dans le boîtier étant placés des éléments fonctionnels, qui sont électriquement reliés avec les contacts de sortie (24), **caractérisé en ce que** les contacts d'entrée (7) et les contacts de sortie (24) sont électriquement et mécaniquement reliés par l'intermédiaire de contacts (8, 28) d'interface, les contacts d'entrée (7) étant placés dans un module de base (2) et les contacts de sortie (24) étant placés dans au moins deux modules partiels (3), les modules partiels (3) pouvant être détachés du module ou reliés au module indépendamment les uns des autres.

2. Module de branchement de répartiteur selon la revendication 1, **caractérisé en ce que** le module de base (2) comprend une partie centrale (70), les contacts d'entrée (7) étant placés dans au moins un module partiel (71) qui sont encliquetés dans la partie centrale (70).

3. Module de branchement de répartiteur selon la revendication 2, **caractérisé en ce que** les forces de liaison entre le ou les module(s) partiel(s) (71) et les contacts d'entrée (7) sont supérieures d'un multiple aux forces de liaison entre les modules partiels (3) et les contacts de sortie (24), ainsi que le module de base (2).

4. Module de branchement de répartiteur selon l'une quelconque des revendications précédentes, **caractérisé en ce que** les éléments fonctionnels sont conçus en tant que déchargeurs (50).

5. Module de branchement de répartiteur selon l'une quelconque des revendications précédentes, **caractérisé en ce que** par les contacts de sortie (24), les modules partiels (3) sont encliquetés dans le module de base (2), le module de base (2) comportant des logements d'encliquetage (75, 76) pour deux positions d'encliquetage des modules partiels (3).

6. Module de branchement de répartiteur selon l'une quelconque des revendications précédentes, **caractérisé en ce que** les modules partiels (3) sont rassemblés à l'aide d'au moins un moyen de fixation en un ensemble.

7. Module de branchement de répartiteur selon l'une quelconque des revendications précédentes, **caractérisé en ce que** sur le module de base (2) est placé au moins un élément de verrouillage, au moyen duquel on verrouille les modules partiels (3) et/ou l'ensemble dans le module de base (2).

8. Module de branchement de répartiteur selon l'une quelconque des revendications précédentes, **caractérisé en ce que** les contacts d'interface (8, 28) sont conçus en tant que languettes de contact et en tant que doubles contacts à ressort.

9. Module de branchement de répartiteur selon l'une quelconque des revendications précédentes, **caractérisé en ce que** les contacts de sortie (24) sont reliés à des contacts d'essai (25).

10. Module de branchement de répartiteur selon l'une quelconque des revendications précédentes, **caractérisé en ce que** le module de base (2) comporte des encoches (77, 78), le module de base (2) comportant des encoches (77) accessibles par la face supérieure (79) et des encoches (78) accessibles par la face inférieure (80), les encoches (78) accessibles par la face inférieure (80) étant plus longues.
